# EUROPÄISCHE PATENTANMELDUNG

(11) **EP 4 029 636 A1**
(43) Veröffentlichungstag der Anmeldung: **20.07.2022**
(21) Anmeldenummer: 21152269.3
(22) Anmeldetag: 19.01.2021
(51) Int. Cl.: B23B 29/02

(54) **WERKZEUGGRUNDKÖRPER UND ZERSPANUNGSWERKZEUG**

(71) Anmelder: KOMET Deutschland GmbH, 74354 Besigheim (DE)
(72) Erfinder: Mayer, Manuel, 74354 Besigheim (DE)
(74) Vertreter: Ciesla, Dirk

(57) **Zusammenfassung**

Werkzeuggrundkörper (100) für ein Zerspanungswerkzeug (200), wobei der Werkzeuggrundkörper (100) ein Gehäuse (1) und eine Dämpfungsvorrichtung (2) aufweist, wobei das Gehäuse (1) eine Umfangswandung (3) hat, wobei die Dämpfungsvorrichtung (2) zur Schwingungsdämpfung des Gehäuses (1) ausgebildet und angeordnet ist, wobei der Werkzeuggrundkörper (100) ferner ein Mitnehmerelement (4) zur bezüglich der Drehachse (101) Drehmitnahme eines Schneidenträgers (300) aufweist, wobei das Mitnehmerelement (4) in Blickrichtung parallel zur Drehachse (101) zumindest abschnittsweise innerhalb der Umfangswandung (3) angeordnet ist, mit der Umfangswandung (3) drehmomentschlüssig verbunden ist und aus einer Stirnseite (5) der Umfangswandung (3) bezüglich der Drehachse (101) axial vorsteht.

## Beschreibung

Die vorliegende Erfindung betrifft einen Werkzeuggrundkörper für ein Zerspanungswerkzeug, wobei der Werkzeuggrundkörper ein Gehäuse und eine Dämpfungsvorrichtung aufweist, wobei das Gehäuse eine Umfangswandung hat, die einen Innenraum des Gehäuses zumindest abschnittsweise umfänglich umgibt und sich bezüglich einer Drehachse des Gehäuses axial erstreckt, wobei die Dämpfungsvorrichtung zur Schwingungsdämpfung des Gehäuses ausgebildet und zumindest abschnittsweise innerhalb des Innenraums angeordnet ist, wobei der Werkzeuggrundkörper ferner ein Mitnehmerelement zur bezüglich der Drehachse Drehmitnahme eines Schneidenträgers aufweist, wobei das Mitnehmerelement in Blickrichtung parallel zur Drehachse zumindest abschnittsweise innerhalb der Umfangswandung angeordnet ist, mit der Umfangswandung drehmomentschlüssig verbunden ist und aus einer Stirnseite der Umfangswandung bezüglich der Drehachse axial vorsteht.

Die vorliegende Erfindung betrifft ferner ein Zerspanungswerkzeug, aufweisend einen mit mindestens einem Schneidelement bestückten Schneidenträger und einen Werkzeuggrundkörper.

Die EP 3300820 A1 zeigt einen Werkzeuggrundkörper mit einer Dämpfungsvorrichtung. Der in EP 3300820 A1 gezeigte Werkzeuggrundkörper hat den Nachteil, dass er beim Zerspanen ungünstig belastet wird.

Eine Aufgabe der vorliegenden Erfindung könnte darin gesehen werden, einen Werkzeuggrundkörper und ein Zerspanungswerkzeug bereitzustellen, die bei einem einfachen Aufbau eine längere Lebensdauer haben.

Die Aufgabe wird durch einen erfindungsgemäßen Werkzeuggrundkörper nach Anspruch 1 und ein erfindungsgemäßes Zerspanungswerkzeug nach Anspruch 15 gelöst. Vorteilhafte Weiterbildungen der Erfindung sind in den abhängigen Ansprüchen, die untereinander frei kombinierbar sind, der Beschreibung und der Zeichnung zu entnehmen.

Ein erfindungsgemäßer Werkzeuggrundkörper für ein Zerspanungswerkzeug, wobei der Werkzeuggrundkörper ein Gehäuse und eine Dämpfungsvorrichtung aufweist, wobei das Gehäuse eine Umfangswandung hat, die einen Innenraum des Gehäuses zumindest abschnittsweise umfänglich umgibt und sich bezüglich einer Drehachse des Gehäuses axial erstreckt, wobei die Dämpfungsvorrichtung zur Schwingungsdämpfung des Gehäuses ausgebildet und zumindest abschnittsweise innerhalb des Innenraums angeordnet ist, wobei der Werkzeuggrundkörper ferner ein Mitnehmerelement zur bezüglich der Drehachse Drehmitnahme eines Schneidenträgers aufweist, wobei das Mitnehmerelement in Blickrichtung parallel zur Drehachse zumindest abschnittsweise innerhalb der Umfangswandung angeordnet ist, mit der Umfangswandung drehmomentschlüssig verbunden ist und aus einer Stirnseite der Umfangswandung bezüglich der Drehachse axial vorsteht.

Dadurch hat der erfindungsgemäße Werkzeuggrundkörper eine höhere Lebensdauer, weil keine zusätzlichen Querbelastungen von Bereichen jeweils außerhalb von dem Mitnehmerelement und der Umfangswandung aufgrund eines Drehmomentschlusses zwischen dem Mitnehmerelement und dem Schneidenträger auftreten. Querbelastungen führen gegenüber anderen Belastungsarten üblicherweise zu einem früheren Bauteilversagen. So ist die Scherfestigkeit (Festigkeit unter Querkraftbelastung) üblicherweise kleiner als die Zugfestigkeit von einem beliebigen metallischen Material.

Weil die Umfangswandung den Innenraum zumindest abschnittsweise umfänglich umgibt, wird der Umfangswandung dadurch Torsionssteifigkeit verliehen, wodurch die Umfangswandung für eine Drehmomenteinleitung von zum Beispiel einer Werkzeugspindel besonders geeignet ist. Vorzugsweise ist die Umfangswandung daher umfänglich geschlossen ausgebildet.

Die Umfangswandung kann mehrteilig oder einteilig ausgebildet sein.

Das Mitnehmerelement kann mit der Umfangswandung stoffschlüssig oder formschlüssig verbunden sein. Im ersten Fall kann das Mitnehmerelement als monolithischer Fortsatz der Umfangswandung ausgebildet sein. Im zweiten Fall kann das Mitnehmerelement in eine Nut der Umfangswandung axial eingesteckt angeordnet sein, zum Beispiel indem das Mitnehmerelement an einem von dem Mitnehmerelement und der Umfangswandung jeweils verschiedenen Bauteil befestigt ist, vorzugsweise reversibel lösbar befestigt.

Die Dämpfungsvorrichtung sorgt dafür, dass der Werkzeuggrundkörper unter einer Zerspanung eines Werkstücks gegenüber einem Zustand ohne die Dämpfungsvorrichtung schwerer in Schwingungen versetzt werden kann. In einer besonders einfachen und damit kostengünstigen Ausbildung der Dämpfungsvorrichtung weist die Dämpfungsvorrichtung mindestens eine monolithische Dämpfungsmasse auf, die eine höhere Dichte als die Umfangswandung hat.

Der erfindungsgemäße Werkzeuggrundkörper ist vorteilhafterweise für ein Fräswerkzeug ausgebildet, weil bei einem Fräswerkzeug üblicherweise besonders große Querbelastungen aufgrund eines Drehmomentschlusses auftreten, insbesondere in Kombination mit unerwünschten Ratterschwingungen, gegen welche die Dämpfungsvorrichtung wirkt.

Gemäß einer Weiterbildung des erfindungsgemäßen Werkzeuggrundkörpers ist das Mitnehmerelement reversibel lösbar in die Umfangswandung bezüglich der Drehachse axial eingesteckt und ist eine Mitnehmerflanke des Mitnehmerelements einer in die Umfangswandung eingelassenen Umfangswandungsflanke zugewandt. Dies ist eine baulich besonders einfache und damit kostengünstige sowie wartungsarme Maßnahme, die Querkraftbelastung von Bereichen jeweils außerhalb von dem Mitnehmerelement und der Umfangswandung zu reduzieren. So kann die Umfangswandungsflanke durch eine stirnseitig offene Nut in der Umfangswandung hergestellt werden, ohne dass aufseiten der Umfangswandung für die Drehmomentübertragung weitere Maßnahmen benötigt würden. Indem das Mitnehmerelement reversibel lösbar eingesteckt ist, kann es besonders einfach ausgetauscht werden, zum Beispiel gegen ein axial längeres. Vorteilhafterweise schlagen die Mitnehmerflanken gegen die Umfangswandungsflanken direkt an.

Gemäß einer Weiterbildung des erfindungsgemäßen Werkzeuggrundkörpers weist der Werkzeuggrundkörper ein auf die Stirnseite der Umfangswandung aufgesetztes Anschlusselement zum Anschließen an den Schneidenträger auf, wobei das Mitnehmerelement reversibel lösbar mit dem Anschlusselement verbunden ist und aus dem Anschlusselement bezüglich der Drehachse axial vorsteht. Das Mitnehmerelement wird also bezüglich einer Relativbewegung weg von dem Anschlusselement gesichert, wobei eine Schnittstelle zwischen dem Mitnehmerelement und dem Anschlusselement keine zusätzliche Querkraftbelastung aufgrund eines Drehmomentschlusses zwischen dem Mitnehmerelement und dem Schneidenträger erfährt.

Eine reversibel lösbare Verbindung kann im Sinne der vorliegenden Offenbarung zum Beispiel durch eine Schraubenverbindung realisiert werden.

Indem das Anschlusselement auf die Stirnseite der Umfangswandung aufgesetzt ist, wird eine Grenzfläche zwischen der Stirnseite aufseiten der Umfangswandung und dem Anschlusselement gebildet.

Gemäß einer Weiterbildung des erfindungsgemäßen Werkzeuggrundkörpers weist der Werkzeuggrundkörper ein Befestigungselement auf, wobei das Befestigungselement bezüglich der Drehachse im Wesentlichen radial durch das Mitnehmerelement durchgesteckt ist und in dem Anschlusselement verankert ist. Das Mitnehmerelement wird also bezüglich einer Relativbewegung weg von dem Anschlusselement axial gesichert, wobei das Befestigungselement keine zusätzliche Querkraftbelastung aufgrund eines Drehmomentschlusses zwischen dem Mitnehmerelement und dem Schneidenträger erfährt, also eine längere Lebensdauer hat. Vorteilhafterweise ist das Befestigungselement als Schraube mit einem Außengewinde ausgebildet und ist dieses Außengewinde in ein Innengewinde des Anschlusselements eingeschraubt.

Bezüglich der Drehachse im Wesentlichen radial heißt bezüglich des Befestigungselements im Sinne der vorliegenden Offenbarung, dass das Befestigungselement eine Längsachse hat, die ausgehend von einer radialen Mittelstellung zur Drehachse im Bereich von +/- 15° gegenüber der Drehachse geneigt ist oder die radiale Mittelstellung einhält.

Gemäß einer Weiterbildung des erfindungsgemäßen Werkzeuggrundkörpers ist das Anschlusselement bezüglich der Drehachse axial vorgespannt mit der Umfangswandung verbunden. Das Anschlusselement ist dadurch axial gesichert und kann einen Innenbereich der Umfangswandung besser abdichten.

Gemäß einer Weiterbildung des erfindungsgemäßen Werkzeuggrundkörpers weist der Werkzeuggrundkörper ferner ein weiteres Befestigungselement auf, wobei das weitere Befestigungselement in eine Durchgangsausnehmung der Umfangswandung und eine Aufnahmeausnehmung des Anschlusselements bezüglich der Drehachse im Wesentlichen radial eingesteckt ist und die Durchgangsausnehmung und die Aufnahmeausnehmung zueinander versetzt angeordnet sind. Das Anschlusselement wird also durch das weitere Befestigungselement von dem Gehäuse in einer vorgegebenen Position gehalten. Eine auf das Anschlusselement wirkende axiale Vorspannung kann dabei besonders präzise eingestellt werden, und zwar indem die Durchgangsausnehmung der axialen Vorspannung folgend von der Aufnahmeausnehmung weiter versetzt angeordnet ist. Vorteilhafterweise ist das weitere Befestigungselement als Schraube mit einem Außengewinde ausgebildet und ist dieses Außengewinde in ein Innengewinde der Aufnahmeausnehmung eingeschraubt.

Gemäß einer Weiterbildung des erfindungsgemäßen Werkzeuggrundkörpers ist das Mitnehmerelement in eine u-förmige Einstecknut der Umfangswandung eingesteckt. Die u-förmige Einstecknut hat eine reduzierte Kerbwirkung, was die Stabilität der Umfangswandung verbessert.

Gemäß einer Weiterbildung des erfindungsgemäßen Werkzeuggrundkörpers ist die Einstecknut gewindefrei ausgebildet. Dies reduziert die Kerbwirkung noch weiter.

Gemäß einer Weiterbildung des erfindungsgemäßen Werkzeuggrundkörpers ist das Anschlusselement durch eine Klebeverbindung mit dem Gehäuse verbunden. Das Anschlusselement wird also durch die Klebeverbindung von dem Gehäuse in einer vorgegebenen Position gehalten. Die Klebeverbindung lässt sich unter Vermeidung einer Bearbeitung des Gehäuses, insbesondere der Herstellung einer Bohrung, herstellen, was die Konstruktion des erfindungsgemäßen Werkzeuggrundkörpers weiter vereinfacht und robust macht. Vorteilhafterweise ist die Klebeverbindung im Bereich der Umfangswandung ausgebildet.

Gemäß einer Weiterbildung des erfindungsgemäßen Werkzeuggrundkörpers ist das Mitnehmerelement bezüglich der Drehachse radial von außen aufseiten der Umfangswandung zugänglich ausgebildet. Das Mitnehmerelement kann also besonders leicht von radial außen montiert, inspiziert und ausgerichtet werden.

Gemäß einer Weiterbildung des erfindungsgemäßen Werkzeuggrundkörpers weist der erfindungsgemäße Werkzeuggrundkörper ein weiteres Mitnehmerelement zur bezüglich der Drehachse Drehmitnahme des Schneidenträgers auf, wobei das weitere Mitnehmerelement mit der Umfangswandung drehmomentschlüssig verbunden ist und aus der Stirnseite der Umfangswandung bezüglich der Drehachse axial vorsteht und in Blickrichtung parallel zur Drehachse diametral zum Mitnehmerelement angeordnet ist. Dadurch wird der Drehmomentschluss mit dem Schneidenträger verbessert und gegen den Ausfall eines der Mitnehmerelemente abgesichert.

Gemäß einer Weiterbildung des erfindungsgemäßen Werkzeuggrundkörpers ist die Dämpfungsvorrichtung bezüglich der Drehachse drehelastisch gelagert. Dies wirkt einem Aufschwingen der Dämpfungsmasse entgegen, weil die Dämpfungsmasse bezüglich einer Drehschwingung von der Umfangswandung isoliert ist. Vorteilhafterweise ist die Dämpfungsvorrichtung bezüglich der Drehachse drehelastisch gelagert, indem die Dämpfungsvorrichtung mit dem Anschlusselement verbunden ist, wobei axial zwischen dem Anschlusselement und der Dämpfungsvorrichtung eine mehrlagige Verbindungsvorrichtung vorgesehen ist, wobei die Verbindungsvorrichtung eine innere Kernlage, eine hintere Außenlage und eine vordere Außenlage aufweist, wobei die hintere Außenlage mit der Dämpfungsvorrichtung verbunden ist, die vordere Außenlage mit dem Anschlusselement verbunden ist und die Kernlage eine größere Drehelastizität hat als jeweils die hintere Außenlage und die vordere Außenlage; die Kernlage ist zwischen den Außenlagen angeordnet. So kann die Kernlage zum Beispiel aus einem Elastomer bestehen und die beiden Außenlagen jeweils aus einem Stahl oder anderem Metall. Ergänzend oder alternativ zur Verbindungsvorrichtung kann eine weitere Verbindungsvorrichtung vorgesehen sein, die der Verbindungsvorrichtung analog aufgebaut ist und gegenüberliegend von dem Anschlusselement jeweils mit der Dämpfungsvorrichtung und der Umfangswandung verbunden ist.

Gemäß einer Weiterbildung des erfindungsgemäßen Werkzeuggrundkörpers weist die Dämpfungsvorrichtung eine Dämpfungsmasse auf, wobei die Dämpfungsmasse eine Dichte im Bereich von 10 g/cm³ bis 30 g/cm³ hat. Die Dämpfungsmasse besitzt dadurch also eine relativ große Massenträgheit, so dass die Dämpfungsvorrichtung hochfrequente Schwingungen bei der Zerspanung eines Werkstücks besonders gut dämpft.

Gemäß einer Weiterbildung des erfindungsgemäßen Werkzeuggrundkörpers weist der erfindungsmäße Werkzeuggrundkörper eine innere Kühlmittelkanalstruktur auf, wobei die Kühlmittelkanalstruktur sich durch die Dämpfungsvorrichtung bezüglich der Drehachse axial erstreckt, zur Kühlmittelversorgung des Schneidenträgers ausgebildet ist und eine Kanalwandung hat, die einen flüssigkeitsfreien Spalt zur Dämpfungsvorrichtung einhält. Weil der Spalt flüssigkeitsfrei ist, entfällt eine Abdichtung davon zugunsten einer wartungsarmen Bauweise des erfindungsgemäßem Werkzeuggrundkörpers. Die Kühlmittelkanalstruktur sorgt dafür, dass zum Beispiel Schneidelemente des Schneidenträger besser gekühlt werden können und so eine längere Lebensdauer haben. Der flüssigkeitsfreie Spalt sorgt dafür, dass eine präzise Ausrichtung der Kanalwandung zur Dämpfungsvorrichtung entfällt, die Kanalwandung also einfacher montiert werden kann und so zum Beispiel ein axialer Versatz zur Dämpfungsvorrichtung toleriert werden kann. Außerdem sorgt der flüssigkeitsfreie Spalt dafür, dass die Dämpfungsvorrichtung bezüglich der Drehachse radial schwingen kann, so dass sich die Dämpfungsvorrichtung drehelastisch lagern lässt.

Gemäß einer Weiterbildung des erfindungsgemäßen Werkzeuggrundkörpers hat die Umfangswandung einen Querschnitt, der senkrecht zur Drehachse orientiert ist, kreisringförmig ist und von dem Mitnehmerelement unterbrochen ist. Dies macht die Umfangswandung im Bereich des Mitnehmerelements besonders torsionssteif.

Ein erfindungsgemäßes Zerspanungswerkzeug weist einen mit mindestens einem Schneidelement bestückten Schneidenträger und den Werkzeuggrundkörper nach Anspruch 1 und/oder nach einem der von Anspruch 1 abhängigen Ansprüche auf, wobei das Mitnehmerelement in den Schneidenträger drehmomentschlüssig eingreift. Dadurch sind die für den erfindungsgemäßen Werkzeuggrundkörper offenbarten Eigenschaften und Vorteile bei dem erfindungsgemäßen Zerspanungswerkzeug realisiert. Das erfindungsgemäße Zerspanungswerkzeug ist vorzugsweise als Fräswerkzeug ausgebildet. Das mindestens eine Schneidelement ist vorzugsweise reversibel lösbar an dem Schneidenträger befestigt.

Weitere Vorteile und Zweckmäßigkeiten der Erfindung ergeben sich anhand der nachfolgenden Beschreibung von zwei Ausführungsbeispielen unter Bezugnahme auf die beigefügten Figuren.

Von den Figuren zeigen
- Fig. 1:: eine perspektivische Darstellung eines vorderen Abschnittes eines erfindungsgemäßen Werkzeuggrundkörpers;
- Fig. 2:: einen Längsschnitt durch den Werkzeuggrundkörper aus Fig. 2;
- Fig. 3:: einen Querschnitt durch den Werkzeuggrundkörper aus Fig. 2;
- Fig. 4:: einen vergrößerten Bereich von dem Querschnitt aus Fig. 3;
- Fig. 5:: eine perspektivische Darstellung eines vorderen Abschnittes eines erfindungsgemäßen Zerspanungswerkzeugs.

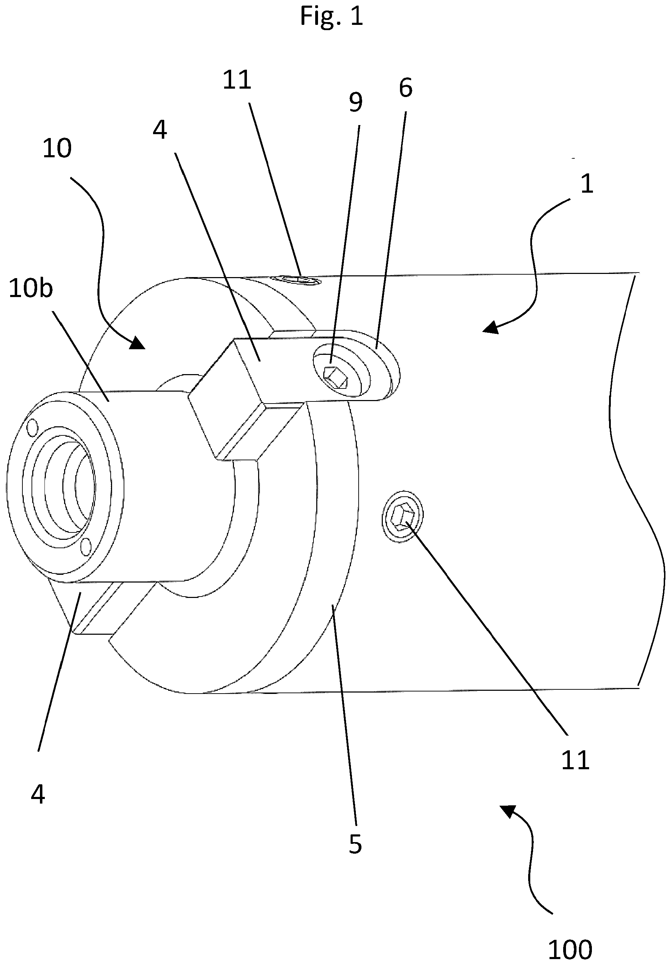

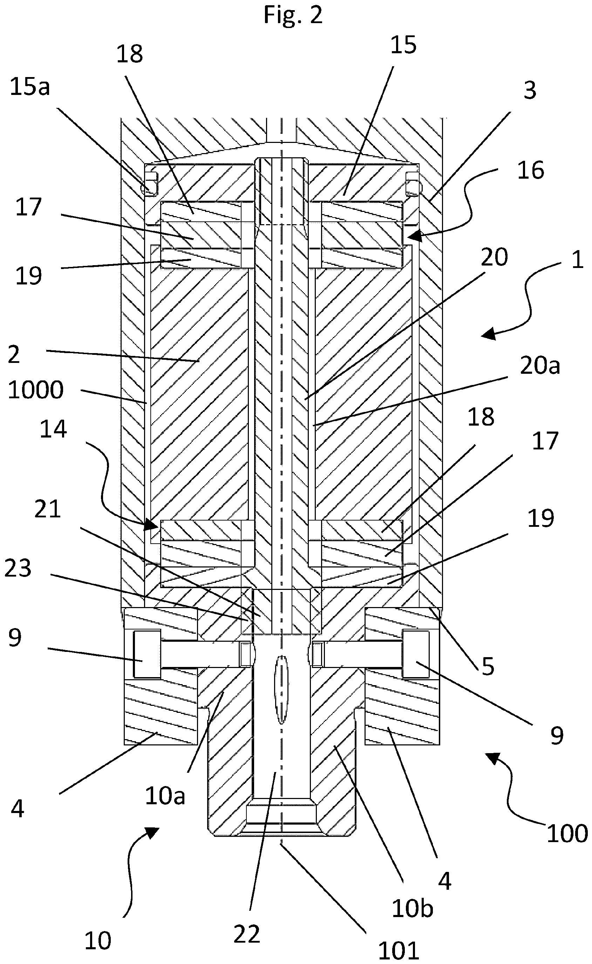

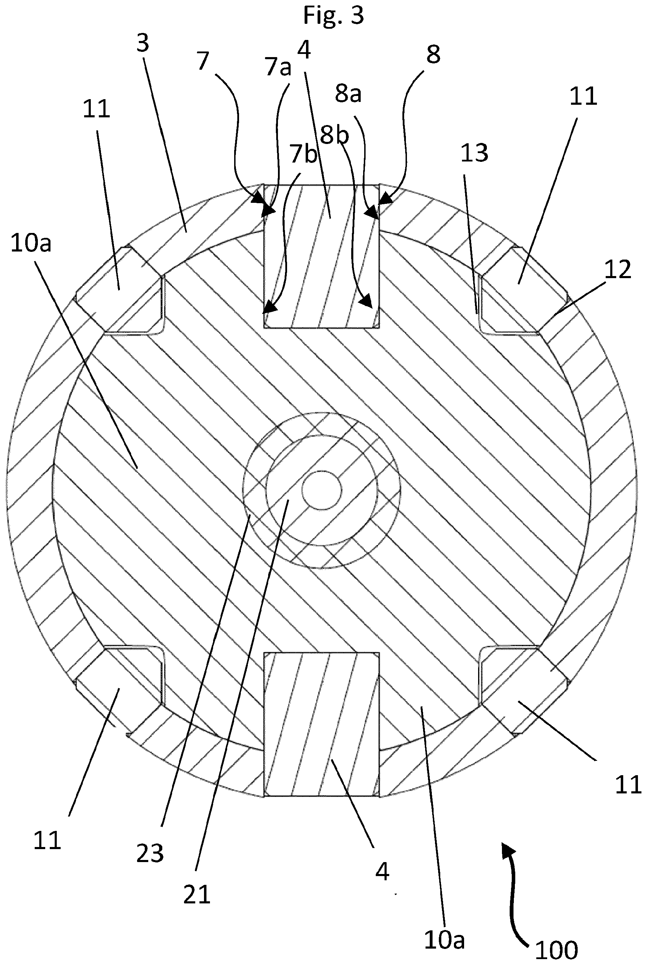

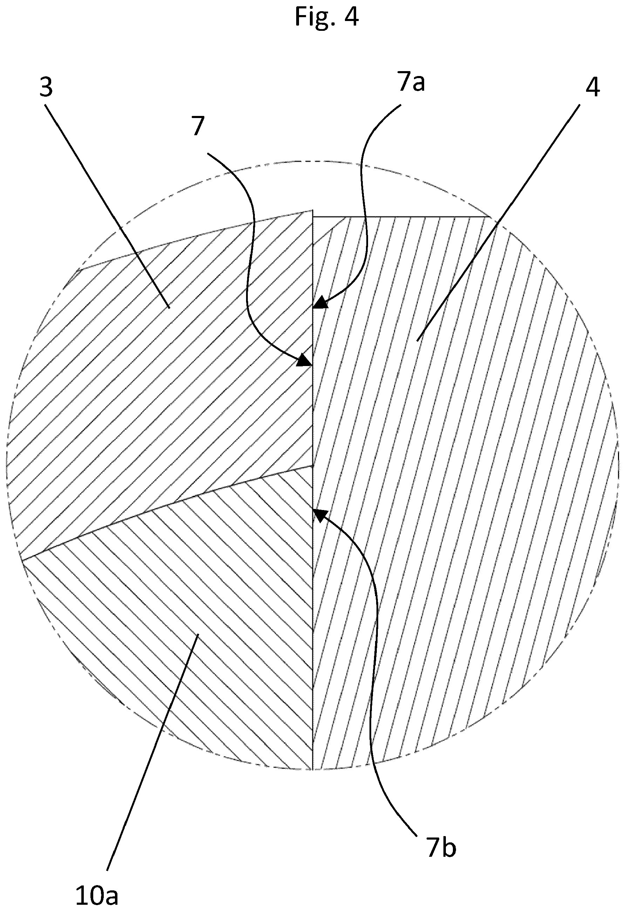

Die Zusammenschau der Fig. 1 bis Fig. 4 zeigt den Aufbau und die Funktionsweise eines erfindungsgemäßen Werkzeuggrundkörpers 100, welcher zum Zusammenwirken mit einem Fräswerkzeug ausgebildet ist. So zeigt Fig. 1 einen vorderen Abschnitt von dem Werkzeuggrundkörper 100, und Fig. 2 einen Längsschnitt, welcher eine Drehachse 101 eines Gehäuses 1 des Werkzeuggrundkörpers 100 enthält, sowie Fig. 3 einen Querschnitt, welcher senkrecht zur Drehachse 101 steht, jeweils durch den Werkzeuggrundkörper 100. Fig. 4 zeigt einen vergrößerten Bereich von dem Querschnitt aus Fig. 3.

Der in den Fig. 1 bis 4 gezeigte Werkzeuggrundkörper 100 weist ein Gehäuse 1 und eine hohlzylindrische Dämpfungsvorrichtung 2, welche eine Dämpfungsmasse hat, auf, wobei das Gehäuse 1 eine Umfangswandung 3 hat, die die Dämpfungsvorrichtung 2 bezüglich der Drehachse 101 umfänglich umgibt und sich bezüglich der Drehachse 101 axial erstreckt, wobei die Dämpfungsvorrichtung 2 zur Schwingungsdämpfung des Gehäuses 1 ausgebildet und angeordnet ist, wobei der Werkzeuggrundkörper 100 ferner zwei Mitnehmerelemente 4 zur bezüglich der Drehachse 101 Drehmitnahme eines nicht dargestellten Schneidenträgers aufweist, wobei die Mitnehmerelemente 4 in Blickrichtung parallel zur Drehachse 101 in die Umfangswandung 2 jeweils hineinragen, also innerhalb der Umfangswandung 2 angeordnet sind. Die Mitnehmerelemente 4 sind jeweils drehmomentschlüssig mit der Umfangswandung 3 verbunden, wie dies die Querschnitte in Fig. 3 und Fig. 4 jeweils zeigen, weil die Mitnehmerelemente 4 in Umfangsrichtung bezüglich der Drehachse 101 jeweils gegen die Umfangswandung 3 anschlagen.

Ferner stehen die Mitnehmerelemente 4 aus einer Stirnseite 5 der Umfangswandung 3 bezüglich der Drehachse 101 axial vor, wie dies in Fig. 1 besonders gut ersichtlich ist, so dass die Mitnehmerelemente 4 jeweils in den nicht dargestellten Schneideträger eingreifen können.

Die Umfangswandung 3 umgibt einen Innenraum 1000 des Gehäuses 1 umfänglich und erstreckt sich bezüglich der Drehachse 101 axial. Die Dämpfungsvorrichtung 2 ist innerhalb des Innenraums 1000 angeordnet.

Fig. 1 zeigt ferner, dass die Mitnehmerelemente 4 jeweils in eine u-förmige Einstecknut 6 der Umfangswandung 3 eingesteckt sind, wobei die Einstecknut 6 aufseiten der Stirnseite 5 daher offen ist. Die Querschnitte aus Fig. 3 und Fig. 4 zeigen, dass die Mitnehmerelemente 4 jeweils zwei gegenüberliegende Mitnehmerflanken 7 und 8 haben; aus Gründen der Übersichtlichkeit sind die Mitnehmerflanken nur an einem der Mitnehmerelemente 4 mit den Bezugszeichen 7 und 8 versehen.

Die Mitnehmerflanke 7 schlägt gegen eine Umfangswandungsflanke 7a der Umfangswandung 3 an und die Mitnehmerflanke 8 gegen eine Umfangswandungsflanke 8a der Umfangswandung 3; aus Gründen der Übersichtlichkeit sind die Umfangswandungsflanken nur aufseiten eines der Mitnehmerelemente mit den Bezugszeichen 7a und 8a versehen.

Die Mitnehmerelemente 4 sind jeweils bezüglich der Drehachse 101 axial gesichert, weil durch die Mitnehmerelemente 4 jeweils ein Befestigungselement 9 radial zur Drehachse durchgesteckt ist und in ein auf das Gehäuse 1 aufgesetztes Anschlusselement 10 eingeschraubt ist. Auf diese Weise lässt sich ein Drehmoment bezüglich der Drehachse 101 von der Umfangswandung 3 direkt jeweils auf die Mitnehmerelemente 4 übertragen, ohne dass der Werkzeuggrundkörper 100 dabei zusätzliche Querkraftbelastungen außerhalb der Umfangswandung 3 und der Mitnehmerelement 4 erfährt. Dies gilt insbesondere für die Befestigungselemente 9, die jeweils als Schrauben ausgebildet sind.

Dass die Mitnehmerflanke 7 auch gegen eine Anschlussflanke 7b von einer Deckelwandung 10a des Anschlusselements 10 und die Mitnehmerflanke 8 auch gegen eine Anschlussflanke 8b der Deckelwandung 10a anschlagen, führt zu keiner zusätzlichen Drehmomentübertragung auf die Mitnehmerelemente 7 und 8, weil die Mitnehmerelemente 7 und 8 gegen die Umfangswandung 3 anschlagen, also gegen das drehmomenteinleitende Bauteil des Werkzeuggrundkörpers 1 beim zum Beispiel Fräsen und Antrieb durch eine Werkzeugspindel; aus Gründen der Übersichtlichkeit sind die Anschlussflanken nur aufseiten eines der Mitnehmerelemente 4 mit den Bezugszeichen 7b und 8b versehen. Der Anschlag der Mitnehmerelemente 4 jeweils gegen die Anschlussflanke 7b und 8b dient als Einführhilfe dafür, dass das Anschlusselement 10 in reproduzierbarer Orientierung auf das Gehäuse 1 aufgesetzt werden kann.

Das Anschlusselement 10 ist bezüglich der Drehachse 101 mit der Umfangswandung 3 axial vorgespannt verbunden, indem vier weitere Befestigungselemente 11 in eine Durchgangsausnehmung 12 der Umfangswandung 3 und eine Aufnahmeausnehmung 13 des Anschlusselements 10 bezüglich der Drehachse 101 jeweils radial eingesteckt und so mit der Deckelwandung 10a verschraubt sind; aus Gründen der Übersichtlichkeit sind die Durchgangsausnehmungen und die Aufnahmeausnehmungen nur aufseiten eines der weiteren Befestigungselemente 11 mit den Bezugszeichen 12 und 13 versehen. Die Ausnahmenausnehmungen 13 sind den Durchgangsausnehmungen 12 bezüglich der Drehachse 101 axial versetzt angeordnet, so dass auf diese Weise die axiale Vorspannung erzeugt wird.

Die weiteren Befestigungselemente 11 sind als Madenschrauben ausgebildet, so dass die weiteren Befestigungselemente 11 radial nicht aus der Umfangswandung 3 vorstehen.

In Fig. 3 ist besonders gut ersichtlich, dass die Umfangswandung 3 einen kreisringförmigen Querschnitt hat, der von den Mitnehmerelementen 4 und den Befestigungselementen 11 unterbrochen wird. Dass die Umfangswandung 3 kreisringförmig ist, verleiht ihr Torsionssteifigkeit.

Der innere Aufbau des Werkzeuggrundkörpers 100 ist in Fig. 2 besonders gut zu erkennen. Die Dämpfungsvorrichtung 2 hat eine Dämpfungsmasse mit einer Dichte von exemplarisch 20 g/cm³, denkbar und auch möglich ist auch eine andere Dichte aus dem Bereich von 10 g/cm³ bis 30 g/cm³.

Die Dämpfungsvorrichtung 2 ist drehelastisch in dem Gehäuse 1 gelagert, indem die Dämpfungsvorrichtung 2 mit dem Anschlusselement 10 durch eine Verbindungsvorrichtung 14 und gegenüberliegend von dem Anschlusselement 10 mit einer Montagescheibe 15 durch eine der Verbindungsvorrichtung 14 analog ausgebildete weitere Verbindungsvorrichtung 16 verbunden ist; die Montagescheibe 15 ist drehstarr bezüglich der Drehachse 101 mit der Umfangswandung 3 verbunden und hat einen eingelassenen O-Ring 15a zur Abdichtung gegen einen Flüssigkeitseintritt zwischen die Montagescheibe 15 und die Umfangswandung 3.

Die Verbindungsvorrichtung 14 und die weitere Verbindungsvorrichtung 16 haben jeweils eine Kernlage 17 aus einem Elastomer, ein hintere Außenlage 18 und eine vordere Außenlage 19, wobei die Kernlagen 17 jeweils zwischen der hinteren Außenlage und der vorderen Außenlage liegen und die Außenlagen 18 und 19 jeweils aus einem Stahl bestehen.

In Fig. 2 ist ferner ersichtlich, dass das Werkzeuggrundkörper 100 ein eingeschraubtes Kühlmittelrohr 20 hat und dass sich das Kühlmittelrohr 20 bezüglich der Drehachse 101 axial durch die Dämpfungsvorrichtung 2 erstreckt und an ein Kühlmittelrohradapterstück 21 des Anschlusselements 10 fluidkommunizierend anstößt, so dass Kühlmittel von dem Kühlmittelrohr 20 durch das Kühlmittelrohradapterstück 21 in einen Kühlmittelversorgungskanal 22 des Anschlusselements10 eintreten und von dem Kühlmittelversorgungskanal 22 in den nicht dargestellten Schneidenträger eintreten kann; das Kühlmittelrohradapterstück 21 hat eine Außendichtung 23 zur Abdichtung gegen einen Kühlmittelrückfluss aus dem Kühlmittelversorgungskanal 22 in das Gehäuse 1. Der Kühlmittelversorgungskanal 22 erstreckt sich in einem Zentrierfortsatz 10b des Anschlusselements 10, wobei der Zentrierfortsatz 10b zur Zentrierung des nicht dargestellten Schneidenträgers angeordnet und ausgebildet ist.

Das Kühlmittelrohr 20 hält einen flüssigkeitsfreien Spalt 20a zur Dämpfungsvorrichtung 2 ein, so dass eine präzise Ausrichtung von dem Kühlmittelrohr 20 innerhalb der Dämpfungsvorrichtung 2 entfällt und die Dämpfungsvorrichtung 2 bezüglich der Drehachse 101 radial schwingen kann.

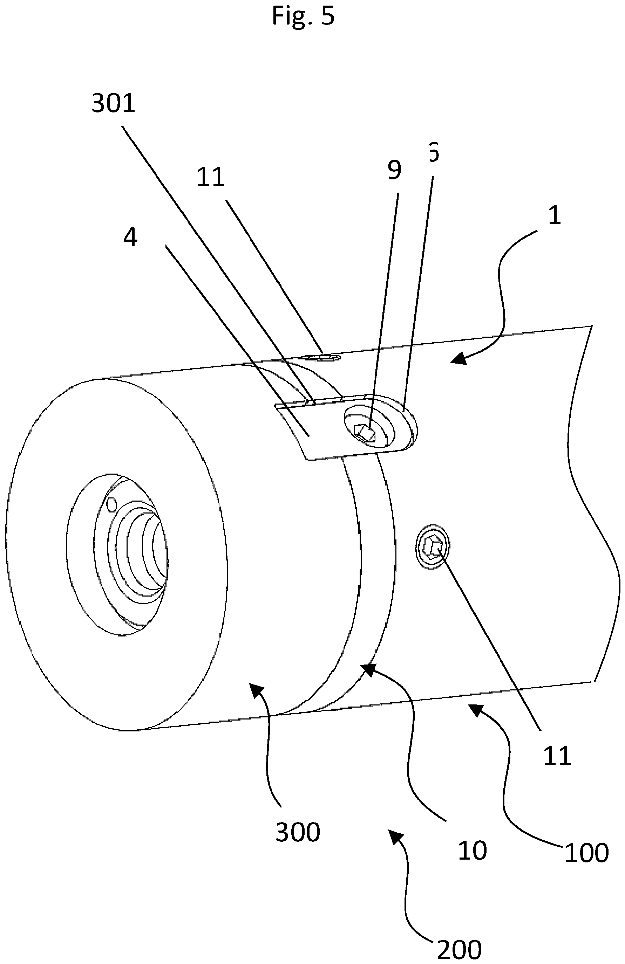

Der nicht dargestellte Schneidenträger kann mit mindestens einem Schneidelement bestückt sein und die Mitnehmerelemente 4 können in den Schneidenträger drehmomentschlüssig eingreifen, so dass auf diese Weise ein erfindungsgemäßes Fräswerkzeug gebildet wird; ein solcher Schneidenträger wird schematisch in Fig. 5 gezeigt, dort mit dem Bezugszeichen 300 versehen.

Fig. 5 zeigt ein erfindungsgemäßes Zerspanungswerkzeug 200. Das Zerspanungswerkzeug 200 hat den Werkzeuggrundkörper 100 und einen lediglich schematisch dargestellten Schneidenträger 300. Der Schneidenträger 300 kann also insbesondere mindestens einen Plattensitz zur Aufnahme eines Schneidelements haben, so dass sich der Schneidenträger 300 mit dem Schneidelement bestücken lässt.

Jedes der Mitnehmerelemente 4 greift jeweils in eine Mitnehmernut 301 des Schneidenträgers 300 drehmomentschlüssig ein, so dass der Schneidenträger 300 von dem Werkzeuggrundkörper 100 drehangetrieben werden kann.

Die Erfindung ist aber nicht auf das Ausführungsbeispiel aus den Fig. 1 bis 4 bezüglich des Werkzeuggrundkörpers 100 und das Ausführungsbeispiel aus Fig. 5 bezüglich des Zerspanungswerkzeugs 300 beschränkt.

Denkbar und auch möglich ist es nämlich auch, dass nur ein Mitnehmerelement 4 oder mehr als zwei Mitnehmerelemente 4 vorgesehen ist bzw. sind und/oder das Mitnehmerelement 4 bzw. die Mitnehmerelemente 4 von den in Fig. 1 bis Fig. 5 gezeigten Mitnehmerelementen 4 verschieden ausgeformt sein können.

Denkbar und auch möglich ist es auch ferner, dass das Anschlusselement 10 stoffschlüssig mit der Umfangswandung 3 verbunden ist, zum Beispiel durch eine Klebeverbindung, wonach das weitere Befestigungselement 11 nicht mehr benötigt wird.

Denkbar und auch möglich ist es auch ferner, dass die Umfangswandung 3 mehrteilig ausgebildet ist, also aus mehreren einzelnen Wandungselementen zusammengesetzt ist.

## Patentansprüche

1. Werkzeuggrundkörper (100) für ein Zerspanungswerkzeug (200), wobei der Werkzeuggrundkörper (100) ein Gehäuse (1) und eine Dämpfungsvorrichtung (2) aufweist, wobei das Gehäuse (1) eine Umfangswandung (3) hat, die einen Innenraum (1000) des Gehäuses (1) zumindest abschnittsweise umfänglich umgibt und sich bezüglich einer Drehachse (101) des Gehäuses (1) axial erstreckt, wobei die Dämpfungsvorrichtung (2) zur Schwingungsdämpfung des Gehäuses (1) ausgebildet und zumindest abschnittsweise innerhalb des Innenraums (1000) angeordnet ist, wobei der Werkzeuggrundkörper (100) ferner ein Mitnehmerelement (4) zur bezüglich der Drehachse (101) Drehmitnahme eines Schneidenträgers (300) aufweist, wobei das Mitnehmerelement (4) in Blickrichtung parallel zur Drehachse (101) zumindest abschnittsweise innerhalb der Umfangswandung (3) angeordnet ist, mit der Umfangswandung (3) drehmomentschlüssig verbunden ist und aus einer Stirnseite (5) der Umfangswandung (3) bezüglich der Drehachse (101) axial vorsteht.

2. Werkzeuggrundkörper (100) nach Anspruch 1, wobei das Mitnehmerelement (4) reversibel lösbar in die Umfangswandung (3) bezüglich der Drehachse (101) axial eingesteckt ist und eine Mitnehmerflanke (7, 8) des Mitnehmerelements (4) einer in die Umfangswandung (3) eingelassenen Umfangswandungsflanke (7a, 8a) zugewandt ist.

3. Werkzeuggrundkörper (100) nach Anspruch 1 oder 2, wobei der Werkzeuggrundkörper (100) ein auf die Stirnseite (5) der Umfangswandung (3) aufgesetztes Anschlusselement (10) zum Anschließen an den Schneidenträger (300) aufweist, wobei das Mitnehmerelement (4) reversibel lösbar mit dem Anschlusselement (10) verbunden ist und aus dem Anschlusselement (10) bezüglich der Drehachse (101) axial vorsteht.

4. Werkzeuggrundkörper (100) nach Anspruch 3, wobei der Werkzeuggrundkörper (100) ein Befestigungselement (9) aufweist, wobei das Befestigungselement (9) bezüglich der Drehachse (101) im Wesentlichen radial durch das Mitnehmerelement (4) durchgesteckt ist und in dem Anschlusselement (10) verankert ist.

5. Werkzeuggrundkörper (100) nach einem der Ansprüche 3 bis 4, wobei das Anschlusselement (10) bezüglich der Drehachse (101) axial vorgespannt mit der Umfangswandung (3) verbunden ist.

6. Werkzeuggrundkörper (100) nach einem der Ansprüche 3 bis 5, wobei der Werkzeuggrundkörper (100) ferner ein weiteres Befestigungselement (11) aufweist, das weitere Befestigungselement in eine Durchgangsausnehmung (12) der Umfangswandung (3) und eine Aufnahmeausnehmung (13) des Anschlusselements (10) bezüglich der Drehachse (101) im Wesentlichen radial eingesteckt ist und die Durchgangsausnehmung (12) und die Aufnahmeausnehmung (13) zueinander axial versetzt angeordnet sind.

7. Werkzeuggrundkörper (100) nach einem der Ansprüche 2 bis 6, wobei das Mitnehmerelement (4) in eine u-förmige Einstecknut (6) der Umfangswandung (3) eingesteckt ist.

8. Werkzeuggrundkörper (100) nach einem der Ansprüche 3 bis 7, wobei das Anschlusselement (10) durch eine Klebeverbindung mit dem Gehäuse (1) verbunden ist.

9. Werkzeuggrundkörper (100) nach einem der vorhergehenden Ansprüche, wobei das Mitnehmerelement (4) bezüglich der Drehachse (101) radial von außen aufseiten der Umfangswandung (3) zugänglich ausgebildet ist.

10. Werkzeuggrundkörper (100) nach einem der vorhergehenden Ansprüche, wobei der Werkzeuggrundkörper (100) ein weiteres Mitnehmerelement (4) zur bezüglich der Drehachse (101) Drehmitnahme des Schneidenträgers (300) aufweist, wobei das weitere Mitnehmerelement (4) mit der Umfangswandung (3) drehmomentschlüssig verbunden ist und aus der Stirnseite (5) der Umfangswandung (3) bezüglich der Drehachse (101) axial vorsteht und in Blickrichtung parallel zur Drehachse (101) diametral zum Mitnehmerelement (4) angeordnet ist.

11. Werkzeuggrundkörper (100) nach einem der vorhergehenden Ansprüche, wobei die Dämpfungsvorrichtung (2) bezüglich der Drehachse (101) drehelastisch gelagert ist.

12. Werkzeuggrundkörper (100) nach einem der vorhergehenden Ansprüche, wobei die Dämpfungsvorrichtung (2) eine Dämpfungsmasse (2) aufweist, wobei die Dämpfungsmasse (2) eine Dichte im Bereich von 10 g/cm³ bis 30 g/cm³ hat.

13. Werkzeuggrundkörper (100) nach einem der vorhergehenden Ansprüche, wobei der Werkzeuggrundkörper (100) eine innere Kühlmittelkanalstruktur (20) aufweist, die Kühlmittelkanalstruktur (10) sich durch die Dämpfungsvorrichtung (2) bezüglich der Drehachse (101) axial erstreckt, zur Kühlmittelversorgung des Schneidenträgers (300) ausgebildet ist und eine Kanalwandung (20) hat, die einen flüssigkeitsfreien Spalt (20) zur Dämpfungsvorrichtung (2) einhält.

14. Werkzeuggrundkörper (100) nach einem der vorhergehenden Ansprüche, wobei die Umfangswandung (3) einen Querschnitt hat, der senkrecht zur Drehachse (101) orientiert ist, kreisringförmig ist und von dem Mitnehmerelement (4) unterbrochen ist.

15. Zerspanungswerkzeug (200), aufweisend einen mit mindestens einem Schneidelement bestückten Schneidenträger (300) und den Werkzeuggrundkörper (100) nach einem der Ansprüche 1 bis 14, wobei das Mitnehmerelement (4) in den Schneidenträger (300) drehmomentschlüssig eingreift.
